Europäisches Patentamt

European Patent Office

Office européen des brevets

(19)

(11) Publication number : **0 455 437 A2**

(12) # EUROPEAN PATENT APPLICATION

(21) Application number : 91303830.3

(22) Date of filing : 26.04.91

(51) Int. Cl.⁵ : **G06F 15/40**

(30) Priority : 01.05.90 US 517087

(43) Date of publication of application :
06.11.91 Bulletin 91/45

(84) Designated Contracting States :
**BE CH DE ES FR GB IT LI NL SE**

(71) Applicant : **International Business Machines
Corporation
Old Orchard Road
Armonk, N.Y. 10504 (US)**

(72) Inventor : **Behm, Jason Lyle
33 Dunneman Avenue
Kingston, New York 12401 (US)**

(74) Representative : **Blakemore, Frederick
Norman
IBM United Kingdom Limited Intellectual
Property Department Hursley Park
Winchester Hampshire SO21 2JN (GB)**

(54) A method of managing computer generated images.

(57) An image manager is provided to manage two dimensional images generated by a computer application such as a numerical simulation. The image manager provides a standard interface to capture plotting commands, transform them into a standardised graphics language representation, and to store them in a hierarchical image database. The image manager further provides a display manager with an operator interface allowing selection of individual images for display on a high definition workstation. The image display manager also allows the selection and display of a related sequence of images with short time separation to provide a movie-like effect. Finally, the image manager allows related images to be viewed through random access to the hierarchical image database.

EP 0 455 437 A2

The present invention relates to a method for managing and displaying computer generated images.

Computer simulations are used to model a real world process or system to study or evaluate that process or system. A simulation can be used, for example, to evaluate a chemical or manufacturing process or to study the feasibility of a design for a manufactured part or a structure or similar item. Computer simulation allows such a system to be evaluated without the cost and effort of actually constructing the system. It allows identification of any problems that might occur in the operation of that system. For example, a computer simulation of the wing design of an aircraft may indicate potential points of metal failure that must be redesigned before the design is finalised.

Complex numerical simulations of an item such as an aircraft wing require considerable computer processing power. The parameters of the model must be evaluated for a large number of sample points over a sufficient number of time intervals. Historically, the output of simulation programs has consisted of tables of numbers representing the values of the variables over time or, in some cases, two dimensional plots of some subset of the variables.

High performance graphics display systems such as the IBM 5080 and IBM 6090 graphics display systems provide an ability to present high resolution two and three dimensional graphic images. Workstations of this type have typically been used in computer aided design and engineering applications (CAD/CAE) for the development of plans and specifications for a new part. In such an application, the display system operator indicates the geometric elements and dimensions of the part and the graphics system generates an image reflecting that specification. The generated image can be manipulated by the operator to change dimensions or to rotate or translate the image.

Computer visualisation uses high resolution graphic display systems in conjunction with numerical simulations to provide a means to view the simulation as it proceeds. While prior art systems have shown an ability to capture images generated by a numerical simulation and display these images on a graphics display system, they are limited to the plotting capabilities of the original simulation unless time consuming custom programming is used to modify or create new simulation plots.

The prior art suffers from the technical problem of being unable to store and randomly access two dimensional or three dimensional plots of simulation results. Conventional techniques allow simulation plots to be drawn by plotting commands on a plotting device such as a paper plotter or graphics display. However, no means exists for storing related plots for later random access.

The present invention provides a means for transforming plotting commands into images that can be organised and randomly accessed for review.

According to the present invention there is provided a method for managing a plurality of disjoint computer generated images represented by a plurality of control signals defining the images in two or more dimensions, the method comprising the steps of: accessing said plurality of control signals; determining which one of a set of plotting actions is defined by each of said control signals; initialising an image structure hierarchy if said signals define a new image action, wherein said initialising includes the steps of allocating hierarchy storage in a storage means, assigning a structure identifier to said image structure hierarchy, and storing image classification criteria with said structure identifier; generating a line image element representing a line if said control signals direct drawing a line; generating a symbol image element if said control signals direct drawing a symbol; storing said line image element or said symbol image element in sail image structure hierarchy; accessing said image classification criteria using operator selection means; storing structure identifiers of all structures accessed and, accessing said image structure hierarchy using said structure identifiers and displaying said image on display means.

Further according to the present invention there is provided a method of viewing time sequenced data plots generated by a computer application, operating on a computer having processing means and a storage means, said method comprising the steps of: transforming said data plots into a hierarchically organised set of data objects; storing said data objects in said storage means; assigning an identifier to each object in said set of data objects, said identifier representing said object content; selecting a series of objects for display; displaying a first object, and displaying each subsequent object in said series, each separated by a time delay.

**In the drawings:**

Fig. 1 is a block diagram showing the major components of a system employing a preferred method of the present invention,

Fig. 2 is a diagram of an example of hierarchical relationships of stored images and

Figs. 3 and 4 are flow diagrams of the operation of the system of Fig. 1.

The present invention provides a means of capturing and managing images generated by computer application programs including numerical simulations. The images are managed and displayed using a graphics workstation or graphics display system such as the IBM 5080 or IBM 6090 graphics display systems.

Computer applications are able to create basic two dimensional information plots using very few commands. A command is necessary to indicate the beginning of a new plot, to specify drawing a line between two points, and to indicate the placement of text or characters on the plot. Historically, computer simulations have plotted the results on line printers or on graphics plotting devices from a variety of manufacturers. The interface to plotting devices is frequently device specific, though several standard plotting command libraries have evolved. The Tektronics Plot10 library is a commonly used interface. Similarly DISSPLA from ISSCO provides another method of specifying two dimensional plots. These command interfaces are device independent allowing computer applications to be developed without knowing the actual output device type. Many hardware vendors have developed interfaces to their devices to accept the standardised commands from these libraries.

Plotting interfaces are designed to produce a set of two dimensional plots. Although each of the plots may be related, for example, representing different points in time, present display technology provides no means of managing those related images. The plots generated by the computer application are typically produced as a stack of printed plots or are sequentially viewed on a graphics display device as they are created. While the plots may be stored on a computer storage device, in the past there has been no means to manage these various images for later recall and display by the researcher in a non-sequential order, i.e. random access.

The graphics community has developed several interface standards for communicating between application programs and graphics display systems such as the IBM 5080. One of the more popular standards is the Programmers Hierarchical Interactive Graphics Standard (PHIGS.) The PHIGS standard provides a common set of language options that can be used by a programmer to direct a program to display objects on a high resolution graphics workstation. The resulting image is created by the specification of a hierarchy of elements. For example, the highest level could be the entire image which may be comprised of a series of objects with each object being further comprised of a set of graphics elements such as circles, lines, arcs. The full set PHIGS interface commands presents a wide range of options and requires an experienced programmer to effectively utilise the graphics display capabilities.

The preferred embodiment of the present invention uses the IBM product graPHIGS, which meets the PHIGS standard, to implement a visualisation image management system. The present invention provides a simplified interface between standardised plotting commands such as Plot10 or DISSPLA and the PHIGS environment that enables researchers with little programming experience to effectively exploit the power of PHIGS.

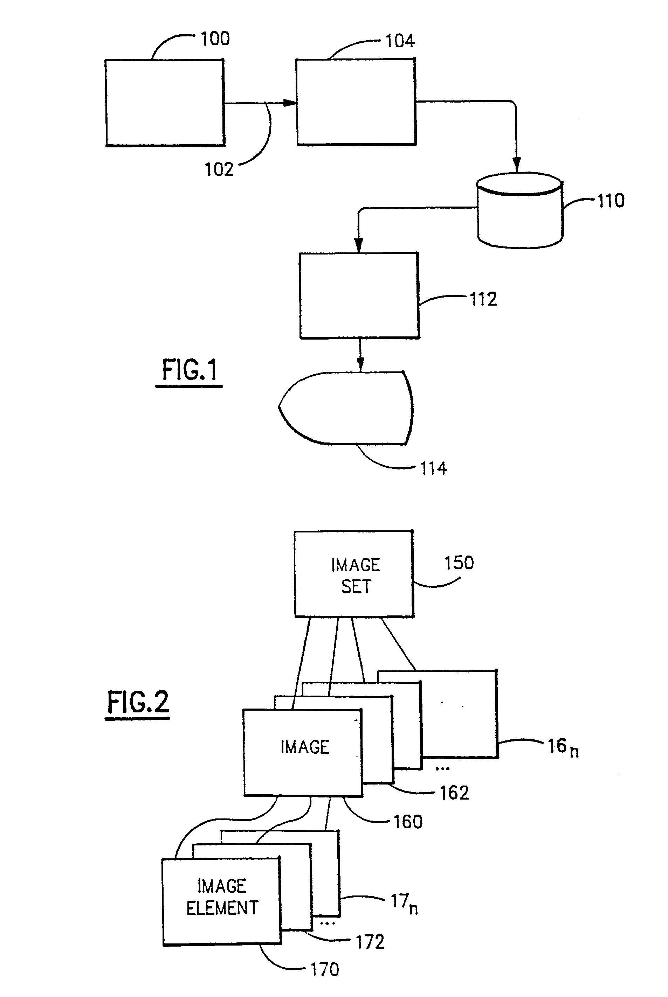

The structure of a graphics system employing the present invention is shown in Fig 1. The computer application 100, for example a numerical simulation of a wing structure, generates a series of plotting commands 102 for several two dimensional plots. Interface procedure 104 according to the present invention intercepts the plotting commands and transforms the commands into graPHIGS commands for storing the plots as individual structures. Because two dimensional plotting relies on just a few basic commands, each of the commands can be effectively translated into graPHIGS commands. The researcher can specify how the series of images generated by the computer application are to be related. This specified relation serves as means to organise and store the images in image database 110.

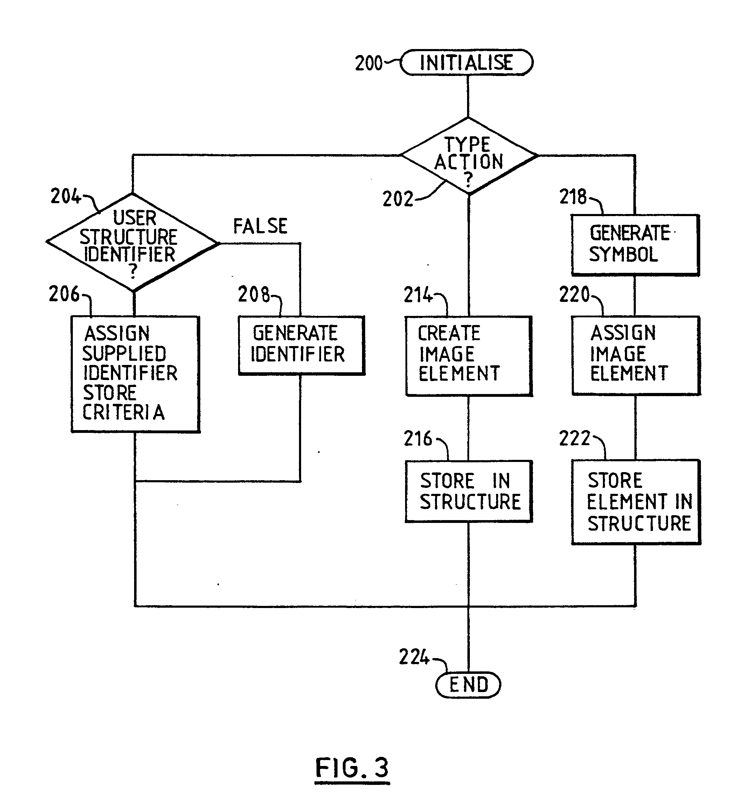

The command transformation performed in interface procedure 104 will be described in greater detail with reference to Fig. 3.

Interface procedure 104 is bound to computer application 100 and intercepts plotting commands 102. Upon initialisation 200, the procedure first determines the type of command intercepted 202. A command defining a "new plot" causes initialisation of a new hierarchical structure to contain that plot. Each new structure is referenced by a system generated or user supplied structure identifier. The procedure tests whether a structure identifier has been supplied 204, if so the user exit is executed 206. The user exit passes the assigned structure identifier back to application 100 for later use. A table of images can be created with selected identifying criteria cross referenced to the structure identifier. Otherwise, the procedure generates an identifier 208. Using this identifier, a PHIGS command is generated to create an image structure indexed by that identifier. This structure becomes the "active structure." Control is returned to the application program 224.

A "plot line" command causes creation of an image element for a line of the required orientation 214. This image element is stored in the active structure 216.

A command requesting a "symbol" is analysed to determine the required symbol 218. A symbol image element is generated 220 and stored in the active structure 222.

For example, a simulation may generate plots of different variables at fixed increments of simulated time, generating first a plot of temperature, then one of pressure, then one of velocity. These plots are recorded by the image manager so that all the plots for a time step can be viewed, or all plots for a variable, e.g. temperature, may be viewed. Each plot is assigned a unique structure identifier that can be later used to retrieve and display that plot.

A mechanism is provided to cross reference allowable plot selections to the structure identifiers of stored plots. In the preferred embodiment the mechanism is implemented as a function of the structure identifier. The application creator specifies the form and content of the structure identifier to the image manager, via a user provided subroutine. Another approach would be to supply a cross reference table identifying plots and structure identifiers.

Once an image is stored in the image database 110, display manager 112 can select one or more images for display on graphics display device 114.

The image manager creates the hierarchical image 110, provides for access by display manager 112, and organises the image for ready access by the researcher. In Fig. 2 each image set 150 is comprised of a series of images 160, 162-16N. Each image 160 is comprised of image elements 170, 172-17N which can be lines, characters, or other geometric objects.

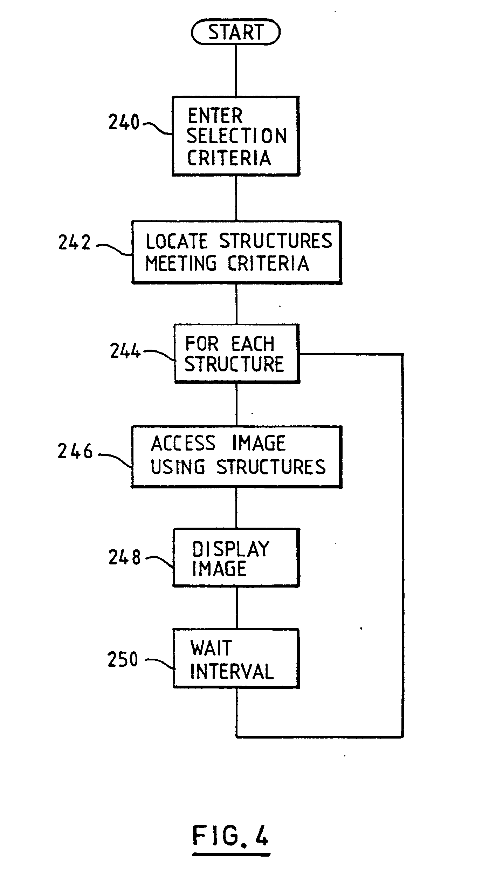

Display manager 112 operates in conjunction with application program 100 as shown in Fig. 4 or an independent program to display image structures created by interface procedure 104. The researcher can specify selection criteria 200 for the display of images. The criteria can include selection of a single image or selection of a series of images to be displayed in sequence. The selection criteria are used to access the table cross referencing the criteria to image structure identifiers 242. The list of structure identifiers is then used to access and display the images 224. Each image is accessed 246, displayed 248 on a selected display device, and then held for a predetermined period 250 before access and display of the next image.

The display manager provides the researcher an ability to display one or more images using the power of a graphics display system such as the IBM 5080. The display manager provides a method for the operator to specify which image is to be displayed and for specifying the orientation of that image on the display. In addition, the display manager provides standard capabilities for displaying a series of related images separated by a short time delay, to create a movie-like effect allowing a two dimensional plot of a variable to be viewed as it changes over time. The display manager can, for example, access all temperature plots in time step sequence and display each one, pause for a brief moment, and then display the next. The result will be a movie-like display showing the change in temperature over time.

The display manager also provides an option to view images related to a particular image in the sequence. For example, an image for a specific time step and plane (XY,XZ,YZ) can display the temperature of the simulated object in that plane. The researcher may wish to view the pressure, density, or other variable captured at that time step for that plane. The hierarchical storage of the standardised image manager allows these images to be accessed and displayed in a non-sequential order upon request of the researcher.

The preferred embodiment of the present invention provides an effective means of interfacing an application program to a high resolution graphics display. The present invention provides a means for capturing disjoint images and storing them in a hierarchically organised database for later access. The display manager provides standardised functions for the researcher to use in the selecting, organising and displaying images relating to a particular computer application.

## Claims

1. A computer implemented method for managing a plurality of disjoint computer generated images represented by a plurality of control signals defining the images in two or more dimensions, the method comprising the steps of:

    accessing said plurality of control signals;

    determining which one of a set of plotting actions is defined by each of said control signals;

    initialising an image structure hierarchy if said signals define a new image action, wherein said initialising includes the steps of allocating hierarchy storage in a storage means, assigning a structure identifier to said image structure hierarchy, and storing image classification criteria with said structure identifier;

    generating a line image element representing a line if said control signals direct drawing a line;

    generating a symbol image element if said control signals direct drawing a symbol;

    storing said line image element or said symbol image element in said image structure hierarchy;

    accessing said image classification criteria using operator selection means;

    storing structure identifiers of all structures accessed and,

    accessing said image structure hierarchy using said structure identifiers and displaying said image on display means.

2. A method of viewing time sequenced data plots generated by a computer application, operating on a computer having processing means and a storage means, said method comprising the steps of:

    transforming said data plots into a hierarchically organised set of data objects;

    storing said data objects in said storage means;

    assigning an identifier to each object in said set of data objects, said identifier representing said object content;

    selecting a series of objects for display;

displaying a first object, and displaying each subsequent object in said series, each separated by a time delay.

FIG.1

FIG.2

200 — ( INITIALISE )

202 — TYPE ACTION ?

204 — USER STRUCTURE IDENTIFIER ?

FALSE

206 — ASSIGN SUPPLIED IDENTIFIER STORE CRITERIA

208 — GENERATE IDENTIFIER

214 — CREATE IMAGE ELEMENT

216 — STORE IN STRUCTURE

218 — GENERATE SYMBOL

220 — ASSIGN IMAGE ELEMENT

222 — STORE ELEMENT IN STRUCTURE

224 — ( END )

## FIG. 3

FIG. 4